# EUROPÄISCHE PATENTSCHRIFT

(11) **EP 3 942 122 B1**
(45) Veröffentlichungstag und Bekanntmachung des Hinweises auf die Patenterteilung: **13.07.2022**
(21) Anmeldenummer: 21700411.8
(22) Anmeldetag: 11.01.2021
(51) Int. Cl.: E04G 17/06, E04G 23/02, F16B 33/00, F16B 4/00, F16B 43/00, F16B 11/00

(54) **VERSCHLUSSSTOPFEN ODER ANKER**
STOPPER OR ANCHOR
BOUCHON OU ANCRAGE

(30) Priorität: 14.01.2020 EP 20151721
(43) Veröffentlichungstag der Anmeldung: 26.01.2022
(73) Patentinhaber: Mastertec GmbH & Co. KG, 96173 Oberhaid (DE)
(72) Erfinder: KROPFELDER, Rainer, 96191 Viereth (DE); STÄBLEIN, Christopher, 96049 Bamberg (DE)
(74) Vertreter: Dr. Gassner & Partner mbB
(86) Internationale Anmeldenummer: PCT/EP2021/050390
(87) Internationale Veröffentlichungsnummer: WO 2021/144225

(56) Entgegenhaltungen:
- WO-A1-97/32141
- FR-A- 1 056 501
- GB-A- 704 510

## Beschreibung

Die Erfindung betrifft einen Verschlussstopfen oder Anker zum, insbesondere wasserdichten, Verschließen eines Durchbruchs oder einer Öffnung in einem Betonbauteil, die eine elastische Hülse mit zwei Enden und einen sich durch die Hülse hindurch erstreckenden Bolzen mit einem Schraubgewinde umfasst.

Ein derartiger Verschlussstopfen ist aus der WO 2008/094647 A1 bekannt. Um mit dem daraus bekannten Verschlussstopfen einen Durchbruch zu verschließen ist es erforderlich, die elastische Hülse mittels des Bolzens und einer auf das Schraubgewinde aufgesetzten Mutter zunächst so zu komprimieren, dass er beim Einsetzen in eine nicht konische Öffnung oder in eine Öffnung, deren Konizität so gestaltet ist, dass sich die Öffnung bzw. der Durchbruch von der Einsetzrichtung des Verschlussstopfens her aufweitet, zumindest so viel Halt in der Öffnung hat, dass eine Mutter auf dem Schraubgewinde angezogen werden kann, ohne dass der Verschlussstopfen sich dabei in der Öffnung dreht. Beim Einsetzen des Verschlussstopfens in eine konische Öffnung oder einen konischen Durchbruch, die bzw. der sich von der Einsetzrichtung des Verschlussstopfens her verjüngt, kann der Verschlussstopfen bei passender Größe soweit in die Öffnung oder den Durchbruch eingesetzt werden, dass er darin festklemmt. In diesem Fall ist es nicht erforderlich, den Verschlussstopfen vorzuspannen. Nach dem Einsetzen wird die Mutter dann soweit angezogen, bis die elastische Hülse dicht an der Wand anliegt. Nachteilig ist dabei, dass die Verschlussstopfen beim Einsetzen in eine nicht konische Öffnung oder eine Öffnung, deren Konizität derart ausgestaltet ist, dass sich diese von der Einsetzrichtung her aufweitet, jeweils vorgespannt werden müssen, um zumindest etwas Halt in der zu verschließenden Öffnung zu haben und dass der Grad der Vorspannung jeweils experimentell ermittelt werden muss. Weiterhin ist dabei nachteilig, dass zum Erreichen einer definierten Komprimierung der Hülse und damit einer definierten Abdichtung ein Anziehen der Mutter mit einem definierten Drehmoment erfolgen muss.

In der WO 97/32141 A1 wird eine Verankerungsvorrichtung offenbart. Diese umfasst eine elastische Hülse zum Aufnehmen eines länglichen Elements und einen ersten und einen zweiten Stopper zur Positionierung auf dem länglichen Element an den jeweiligen Enden der Hülse. Bei dem länglichen Element kann es sich beispielsweise um einen Bolzen handeln. Durch ein Aufeinanderzubewegen der Stopper wird ein radiales Ausdehnen der Hülse bewirkt. Der innere erste Stopper kann entweder in einen Bolzenkopf oder eine Mutter eingreifen, um eine Drehung davon relativ zur Hülse zu verhindern.

Weiterhin ist aus der FR 1 056 501 A eine Verankerungsvorrichtung zum Verankern eines Metallstabs in einem Blindbohrloch bekannt. Die Vorrichtung besteht aus einem Hohlzylinder aus nicht-komprimierbarem aber verformbarem Material, der von einer ausdehnbaren Metallhülse umschlossen ist. Der Metallstab verläuft durch den Zylinder und weist Mittel auf, welche durch Schrauben eine axiale Kompression des Zylinders in der Hülse ermöglichen.

GB 704 510 A beschreibt eine Verankerungsvorrichtung, die eine verformbare Hülse aus nicht-metallischem Material umfasst, welche an beiden Enden offen ist, und eine Ferrule, die mit einer zentralen Bohrung mit einem Gewinde ausgestattet ist und an einem Ende der Hülse angebracht ist. Die Hülse ist so ausgebildet, dass sie beim Eingriff eines Gewindes eines Fixierungsmittels in das Gewinde der Ferrule eine axiale Kontraktion und eine daraus resultierende radiale Ausdehnung ermöglicht. Das Fixierungsmittel ist dabei von deren anderer Seite her in die Hülse eingesetzt. Der äußere Teil der Ferrule umgibt das Ende der Hülse und ist mit einer Anzahl von Schlitzen versehen, die sich zur Mitte hin erstrecken, um ein Biegen des äußeren Teils der Ferrule nach außen bei radialer Ausdehnung der Hülse zu ermöglichen, ohne dass die Kanten oder das Äußere der Ferrule in das Material der Hülse eingebettet sind.

Aufgabe der vorliegenden Erfindung ist es, einen alternativen Verschlussstopfen oder einen Anker bereitzustellen, welcher eine einfachere Handhabung beim Verschließen eines Durchbruchs oder einer Öffnung ermöglicht. Weiterhin sollen eine Verwendung eines solchen Verschlussstopfens oder Ankers und ein Verfahren zum Verschließen eines Durchbruchs oder einer Öffnung in einem Betonbauteil angegeben werden.

Die Aufgabe wird durch die Merkmale der Patentansprüche 1, 13 und 14 gelöst. Zweckmäßige Ausgestaltungen ergeben sich aus den Merkmalen der Patentansprüche 2 bis 12 und 15.

Erfindungsgemäß ist ein Verschlussstopfen oder Anker zum, insbesondere wasserdichten, Verschließen eines Durchbruchs oder einer Öffnung in einem Betonbauteil vorgesehen, der eine, insbesondere zylinderförmige, elastische Hülse mit einem ersten Hülsenende und einem zweiten Hülsenende, einen sich durch die Hülse hindurch erstreckenden Bolzen mit einem Schraubgewinde mit darauf aufgeschraubter Mutter an seinem einen Ende und einem Bolzenkopf oder einem weiteren Schraubgewinde mit darauf aufgeschraubter weiteren Mutter an seinem anderen Ende umfasst. Das Verschließen kann erfolgen, um den Durchbruch oder die Öffnung in dem Betonbauteil gegen ein Ein- oder Durchdringen von Wasser, Feuer, Luftschall oder Radongas zu sichern. Das Verschließen wird als ein wasserdichtes Verschließen erachtet, wenn der/die mit dem Verschlussstopfen oder Anker verschlossene Durchbruch oder Öffnung kein Wasser durchdringen oder eindringen lässt, wenn Wasser mit einem Druck von höchstens 100 Meter Wassersäule, insbesondere höchsten 80 Meter Wassersäule, insbesondere höchsten 50 Meter Wassersäule, insbesondere höchsten 20 Meter Wassersäule, insbesondere höchsten 15 Meter Wassersäule, insbesondere höchsten 10 Meter Wassersäule, insbesondere höchsten 8 Meter Wassersäule, insbesondere höchsten 5 Meter Wassersäule, insbesondere höchsten 3 Meter Wassersäule, insbesondere höchsten 2 Meter Wassersäule, insbesondere höchsten einem Meter Wassersäule, auf den/die mit dem Verschlussstopfen oder Anker verschlossene(n) Durchbruch oder Öffnung drückt.

Bei dem Bolzenkopf handelt es sich um einen Bereich des Bolzens, der gegenüber dem sonstigen Bolzen eine größere Querschnittsfläche bei einem jeweils senkrecht zur Längsachse des Bolzens geführten Querschnitt aufweist. Der Bolzenkopf kann wie ein üblicher Schraubenkopf ausgebildet sein und beispielsweise als Sechskant ausgebildet sein, oder einen Innensechskant zum Ansetzen eines Inbusschlüssels oder eine kreuzförmige oder schlitzförmige Ausnehmung zum Ansetzen eines Kreuzschraubendrehers oder eines Schlitzschraubendrehers aufweisen. Es ist auch möglich, dass der Bolzenkopf ein beliebiges anderes Profil aufweist, welches eine Übertragung eines Drehmoments auf den Bolzenkopf ermöglicht, wie z.B. ein Innensechsrund (Torx). Bei dem Durchbruch kann es sich um einen Durchbruch handeln, der in einer durch Gießen hergestellten Betonwand nach Entfernung der Schalungen und eines die Schalungen zusammenhaltenden Spannankers in der Betonwand verbleibt. Der Durchbruch kann dabei im Beton selbst oder in einem im Beton verbleibenden Hüllrohr, durch welches beim Gießen der Spannanker geführt wurde, vorhanden sein. Ein solcher Durchbruch hat im Allgemeinen einen runden Querschnitt. Er kann jedoch auch eine andere, etwa eine quadratische Querschnittsform aufweisen. In jedem Fall hat die Hülse eine der Querschnittsform des Durchbruchs oder der Öffnung angepasste Form, d. h. bei einem Durchbruch oder einer Öffnung mit quadratischem Querschnitt weist auch die Hülse einen quadratischen Querschnitt auf. Dadurch kann die Hülse in den Durchbruch oder die Öffnung eingesetzt und durch Anziehen der aufgeschraubten Mutter so zusammengedrückt werden, dass sie dicht an der Wandung des Durchbruchs oder der Öffnung anliegt und einen Spalt zwischen Hülse und dieser Wandung wasserdicht verschließt. Weiterhin kann durch das Zusammendrücken der Hülse auch im Inneren der Hülse ein Spalt zwischen dem Bolzen und der Hülse abgedichtet werden. Um diese Abdichtung zu verbessern, kann in einer dem Bolzen zugewandten inneren Wandung der Hülse ein umlaufender Wulst ausgebildet sein, der an der Stelle des Wulstes den Spalt zwischen dem Bolzen und der Hülse verringert. Der Wulst kann eine Stärke von 0,1 mm bis 1 mm, insbesondere 0,2 mm bis 0,5 mm, aufweisen.

Bei dem elastischen Material, aus welchem die elastische Hülse besteht, kann es sich um ein thermoplastisches Elastomer handeln. Das elastische Material kann Neopren, Ethylen-Propylen-Dien-Kautschuk (EPDM), Polyvinylchlorid (PVC), Nitril oder Silikon sein oder zumindest als Bestandteil in einem Copolymer enthalten oder ein anderes dauerhaft elastisches Material sein.

Erfindungsgemäß ist zwischen der Mutter und der Hülse oder zwischen dem Bolzenkopf oder der weiteren Mutter und der Hülse ein Sicherungsmittel vorgesehen. Dabei weist das Sicherungsmittel eine Druckplatte und eine Druckplattendurchbruch, durch den sich der Bolzen erstreckt, auf und stützt sich über diese Druckplatte am ersten Hülsenende oder am zweiten Hülsenende auf. Am jeweils anderen der ersten und zweiten Hülsenenden stützt sich der dort angeordnete Bolzenkopf oder die dort angeordnete Mutter oder die weitere Mutter direkt oder über eine zwischen diesem Bolzenkopf oder dieser Mutter oder dieser weiteren Mutter und der Hülse angeordnete Druckscheibe an diesem anderen der ersten und zweiten Hülsenenden auf. Um sich direkt am anderen der ersten und zweiten Hülsenenden aufstützen zu können, kann der Bolzenkopf oder die Mutter oder die weitere Mutter so ausgebildet sein, dass er/sie eine Fläche aufweist, mit der er/sie sich auf das andere der ersten und zweiten Hülsenenden aufstützt. Das Sicherungsmittel weist zumindest ein federnd mit der Druckplatte verbundenes Klemmmittel auf. Das Klemmmittel ragt über eine gedanklich in Richtung des Sicherungsmittels und über das Sicherungsmittel hinaus verlängerte Außenfläche, insbesondere über einen gedanklich in Richtung des Sicherungsmittels und über das Sicherungsmittel hinaus verlängerten Zylindermantel, der Hülse seitlich heraus. Das Klemmmittel ragt also über die Außenmaße der Hülse hinaus. Die federnde Verbindung des Klemmmittels mit der Druckplatte kann beispielsweise dadurch bereitgestellt werden, dass das gesamte Sicherungsmittel einstückig aus einem elastischen Kunststoff, insbesondere durch Spritzgießen, hergestellt ist und der Kunststoff am Übergang von der Druckplatte zum Klemmmittel eine gegenüber den umgebenden Bereichen verminderte Materialstärke aufweist. Bei dem Kunststoff kann es sich beispielsweise um Polyoxymethylen (POM), ein POM enthaltendes Copolymer, PA (Polyamid), PP (Polypropylen), PVC (Polyvinylchlorid) oder PC (Polycarbonat) handeln. Alternativ kann das Sicherungsmittel auch aus einem Metall, insbesondere einem federnden Metall, hergestellt sein.

Das Klemmmittel dient dazu, das Sicherungsmittel in dem Durchbruch oder der Öffnung gegen ein Verdrehen gegenüber dem Betonbauteil zu sichern. Das zwischen der Mutter oder dem Bolzenkopf oder der weiteren Mutter und der Hülse angeordnete Sicherungsmittel ist gegenüber dieser Mutter oder diesem Bolzenkopf oder dieser weiteren Mutter gegen ein Verdrehen gesichert. Das Sicherungsmittel ist daher von seiner Größe und seiner Form so zu wählen, dass es sich mit seinem Klemmmittel in dem Durchbruch oder der Öffnung so festklemmen kann, dass es sich beim Festziehen der Mutter oder des Bolzenkopfs oder der weiteren Mutter in dem Durchbruch oder der Öffnung nicht dreht, gleichzeitig aber noch in den Durchbruch oder die Öffnung hineingedrückt werden kann. Dadurch kann sich auch die Mutter oder der Bolzenkopf oder die weitere Mutter, welche/welcher gegenüber dem Sicherungsmittel gegen ein Verdrehen gesichert ist, beim Anziehen des Bolzenkopfes oder der Mutter oder der weiteren Mutter, der/die auf der anderen Seite der Hülse gelegen sind, nicht verdrehen. Ein Vorspannen der Hülse, um diese an den Innendurchmesser des Durchbruchs oder der Öffnung anzupassen, ist daher nicht erforderlich. Dies erleichtert und beschleunigt die Handhabung des Verschlussstopfens oder des Ankers bei dessen Montage.

Aus der WO 97/32141 A1 ist eine Verankerungsvorrichtung mit einer Hülse bekannt, bei welcher die Hülse dafür vorgesehen ist, sich in einem Bohrloch zu verklemmen und ein Stopper so in die Hülse eingreift, dass der Stopper gegen ein Verdrehen gegenüber der Hülse gesichert ist. Im Gegensatz dazu muss die Hülse beim erfindungsgemäßen Verschlussstopfen oder Anker nicht so ausgebildet sein, dass sie sich in dem Durchbruch oder der Öffnung in dem Betonbauteil selbst verklemmt. Probleme beim Einführen der Hülse in den Durchbruch oder die Öffnung und die Notwendigkeit, den Durchmesser der Hülse relativ genau an den Durchmesser des Durchbruchs oder der Öffnung anzupassen, werden dadurch vermieden. Beim erfindungsgemäßen Verschlussstopfen oder Anker stellt nur das federnd mit der Druckplatte verbundene Klemmmittel einen Widerstand beim Einführen des erfindungsgemäßen Verschlussstopfens dar. Das Sicherungsmittel kann jedoch, beispielsweise durch die Wahl des Materials, aus dem es hergestellt ist, so ausgebildet sein, dass dieser Widerstand nur gering ist. Dadurch, dass die Mutter oder der Bolzenkopf oder die weitere Mutter nicht selbst als Sicherungsmittel ausgebildet sind, kann der erfindungsgemäße Verschlussstopfen oder Anker günstig aus sehr kostengünstigen Standardbauteilen und dem kostengünstig, zum Beispiel durch Spritzgießen, herzustellenden Sicherungsmittel bereitgestellt werden.

Unter einem Anker wird hier ein in den Durchbruch oder die Öffnung einzusetzendes Haltemittel verstanden, an dem ein weiterer Gegenstand, etwa durch Verschrauben mit einem überstehenden Ende des weiteren Schraubgewindes oder mit einem in dem Bolzen enthaltenen Innengewinde, verankert werden kann.

Bei einer Ausgestaltung des erfindungsgemäßen Verschlussstopfens oder Ankers erstreckt/erstrecken sich das Schraubgewinde und/oder das weitere Schraubgewinde nur über eine vordefinierte Länge des Bolzens, so dass die Hülse bei bis zum Ende des Schraubgewindes eingeschraubter Mutter und/oder bis zum Ende des weiteren Schraubgewindes eingeschraubter weiteren Mutter um eine vordefinierte Strecke zusammengedrückt wird. Zum Einschrauben der Mutter bis zum Ende des Schraubgewindes und/oder der weiteren Mutter bis zum Ende des weiteren Schraubgewindes ist ein definiertes Drehmoment erforderlich, welches im Wesentlichen oder ausschließlich durch die Härte des Materials, aus dem die elastische Hülse besteht, und die Wandstärke der Hülse bestimmt wird. Das Einhalten dieses Drehmoments muss jedoch nicht mit einem speziellen Werkzeug sichergestellt werden, wenn es durch die vordefinierte Länge des Schraubgewindes und/oder des weiteren Schraubgewindes in Kombination mit den Materialeigenschaften der Hülse festgelegt wird. Auch dies vereinfacht und beschleunigt die Handhabung des erfindungsgemäßen Verschlussstopfens oder Ankers bei dessen Montage.

Das Sichern der Mutter oder des Bolzenkopfes oder der weiteren Mutter gegenüber dem Sicherungsmittel gegen ein Verdrehen kann dadurch erfolgen, dass die Mutter oder der Bolzenkopf oder die weitere Mutter mit dem Sicherungsmittel verklebt ist oder dass in dem Sicherungsmittel eine Ausnehmung zur formschlüssigen oder passgenauen reibschlüssigen Aufnahme der Mutter oder des Bolzenkopfes oder der weiteren Mutter vorgesehen ist. Beispielsweise kann dazu das Sicherungsmittel eine sechseckige Ausnehmung aufweisen, in welcher die Mutter oder die weitere Mutter eingesetzt ist. Eine passgenaue reibschlüssige Aufnahme ermöglicht auch bei einem runden Bolzenkopf ein Sichern gegen das Verdrehen, welches ausreicht, um die auf der anderen Seite der Hülse gelegene Mutter anziehen zu können. Zusätzlich zu dem Vorsehen der formschlüssigen oder passgenauen reibschlüssigen Aufnahme ist es möglich, dass die Mutter oder der Bolzenkopf oder die weitere Mutter in der Ausnehmung mit dem Sicherungsmittel verklebt ist.

Bei einer Ausgestaltung des erfindungsgemäßen Verschlussstopfens oder Ankers weist das Sicherungsmittel zumindest zwei federnd mit der Druckplatte verbundene Klemmmittel auf, wobei die Klemmmittel über eine gedanklich in Richtung des Sicherungsmittels und über das Sicherungsmittel hinaus verlängerte Außenfläche der Hülse jeweils seitlich herausragen, um das Sicherungsmittel in dem Durchbruch oder der Öffnung gegen ein Verdrehen gegenüber dem Betonbauteil zu sichern. Der Bolzen weist eine Längsachse auf. Die Klemmmittel können achs- oder drehsymmetrisch um die Längsachse des Bolzens angeordnet sein. Mindestens 3, insbesondere mindestens 4, insbesondere mindestens 5, insbesondere mindestens 6, insbesondere mindestens 7, insbesondere mindestens 8, insbesondere mindestens 9, insbesondere mindestens 10, der Klemmmittel können achs- oder drehsymmetrisch um die Längsachse des Bolzens angeordnet sein. Durch das Vorsehen von mindestens 2, insbesondere achs- oder drehsymmetrisch angeordnete, Klemmmittel und insbesondere einer größeren Zahl der Klemmmittel kann eine Zentrierung des Sicherungsmittels in dem Durchbruch oder der Öffnung besser sichergestellt werden. Dies erleichtert das Einführen in den Durchbruch oder die Öffnung des Betonbauteils.

Um auch ein Verdrehen der Hülse gegenüber dem Sicherungsmittel zu verhindern oder zumindest zu erschweren, wenn die Hülse und das Sicherungsmittel, beispielsweise bei der Montage des erfindungsgemäßen Verschlussstopfens oder Ankers und/oder beim Anziehen der Mutter oder des Bolzenkopfes oder der weiteren Mutter, aufeinandergedrückt werden, kann das Sicherungsmittel auf seiner der Hülse zugewandten Seite mindestens einen Vorsprung aufweisen. Dieser Vorsprung drückt dann in die elastische Hülse hinein und verhindert das Verdrehen der Hülse gegenüber dem Sicherungsmittel. Dadurch kann vermieden werden, dass die Hülse beim Anziehen der Mutter oder des Bolzenkopfes oder der weiteren Mutter durch Drehen an der Innenwandung des Durchbruchs oder der Öffnung aufgerieben wird. Durch ein solches Aufreiben können sich Teile von der Hülse lösen, welche zwischen der Hülse und der Wandung des Durchbruchs oder der Öffnung festgeklemmt werden und später eine Wasserdurchlässigkeit an dieser Stelle, zumindest bei hohem Wasserdruck, bewirken können.

Der Bolzenkopf kann, wenn er am anderen der ersten und zweiten Hülsenenden angeordnet ist, d.h. wenn er nicht gegenüber dem Sicherungsmittel gegen ein Verdrehen gesichert ist und damit bei der Montage auf der Außenseite des Durchbruchs oder der Öffnung angeordnet ist, so ausgebildet sein, dass er mittels eines Schraubwerkzeugs verdreht werden kann. Beispielsweise kann er einen Außensechskant oder einen Innensechskant (Inbus^{®}) oder einen Innensechsrund (Torx) aufweisen oder einfach nur eine schlitzförmige oder eine kreuzförmige Ausnehmung aufweisen, um mit einem Schlitzschraubendreher oder einem Kreuzschraubendreher angezogen zu werden. Auch dies erleichtert die Handhabung beim Einsetzen des Verschlussstopfens oder Ankers sehr. Beispielsweise können derartige Verschlussstopfen mittels eines Akkuschraubers und einem darauf aufgesetzten entsprechenden Schraubwerkzeug angezogen werden.

Der Bolzen kann auf seiner am anderen der ersten und zweiten Hülsenenden gelegenen Seite ein Innengewinde aufweisen. Das Innengewinde kann sich dabei durch den Bolzenkopf hindurch erstrecken. Das Innengewinde ist zur Aufnahme eines Schraubgewindes geeignet und ermöglicht es dadurch, etwas an dem Bolzen festzuschrauben und es dadurch zu verankern. In das Innengewinde kann aber auch ein Schraubgewinde einer Kappe zum Verblenden des Verschlussstopfens eingeschraubt werden.

Erfindungsgemäß ist weiterhin die Verwendung eines erfindungsgemäßen Verschlussstopfens oder Ankers zum, insbesondere wasserdichten, Verschließen eines Durchbruchs oder einer Öffnung in einem Betonbauteil vorgesehen. Die Erfindung betrifft darüber hinaus ein Verfahren zum, insbesondere wasserdichten, Verschließen eines Durchbruchs oder einer Öffnung in einem Betonbauteil mit folgenden Schritten:
a) Hineinschieben eines erfindungsgemäßen Verschlussstopfens oder Ankers in den Durchbruch oder die Öffnung, wobei das Hineinschieben mit dem Sicherungsmittel voran erfolgt und
b) Anziehen des Bolzenkopfes oder der Mutter oder der weiteren Mutter, welcher/welche auf der dem Sicherungsmittel gegenüberliegenden Seite der Hülse angeordnet ist, wobei die Hülse so weit zusammengedrückt wird, dass sie dicht an einer Wand des Durchbruchs oder der Öffnung anliegt.

Durch das Anziehen gemäß Schritt b) und das Zusammendrücken der Hülse wird im Allgemeinen auch bewirkt, dass die Hülse dicht am Bolzen anliegt. Ein Abdichten des Hülseninneren kann aber beispielsweise auch durch das Aufpressen der Druckplatte des Sicherungsmittels und/oder der Druckscheibe auf die Hülse in Kombination mit der auf die Druckplatte und/oder die Druckscheibe drückenden Mutter oder weiteren Mutter oder mit dem auf die Druckplatte und/oder die Druckscheibe drückenden Bolzenkopf, gegebenenfalls in Kombination mit einer zwischen der Druckplatte und/oder der Druckscheibe und der Mutter oder weitern Mutter oder dem Bolzenkopf angeordneten Dichtung, erfolgen.

Bei dem Verfahren und einem Verschlussstopfen oder Anker, bei dem sich das Schraubgewinde oder weitere Schraubgewinde nur über eine vordefinierte Länge des Bolzens erstreckt, so dass die Hülse bei bis zum Ende des Schraubgewindes eingeschraubter Mutter und/oder bis zum Ende des weiteren Schraubgewindes eingeschraubter weiteren Mutter um eine vordefinierte Strecke zusammengedrückt wird, kann der Bolzenkopf oder die weitere Mutter und/oder die weitere Mutter soweit angezogen werden, bis die Mutter das Ende des Schraubgewindes und/oder die weitere Mutter das Ende des weiteren Schraubgewindes erreicht. Dadurch wird die Hülse mit einer durch die Länge des Schraubgewindes und/oder weiteren Schraubgewindes festgelegten Kraft gegen die Innenwand des Durchbruchs oder der Öffnung gedrückt. Dadurch kann ein, insbesondere wasserdichter, Verschluss des Durchbruchs oder der Öffnung in dem Betonbauteil sichergestellt werden. Die Kraft kann dabei umso größer und das Schraubgewinde und/oder das weitere Schraubgewinde umso länger sein, je höher der Wasserdruck ist, dem der Verschlussstopfen oder Anker standhalten muss. Wenn es sich bei dem Betonbauteil beispielsweise um eine Staumauer handelt, kann der Wasserdruck, dem der Verschlussstopfen in dem Durchbruch standhalten muss, sehr hoch sein.

Nachfolgend wird die Erfindung anhand eines Ausführungsbeispiels näher erläutert. Es zeigen:
- Fig. 1: einen Querschnitt durch einen erfindungsgemäßen Verschlussstopfen entlang der Längsachse,
- Fig. 2: eine Aufsicht auf den Verschlussstopfen von einer ersten Seite,
- Fig. 3: eine Aufsicht auf den Verschlussstopfen von einer gegenüberliegenden Seite,
- Fig. 4: eine Aufsicht auf das Sicherungsmittel von einer Seite,
- Fig. 5: eine Aufsicht auf das Sicherungsmittel von einer gegenüberliegenden Seite und
- Fig. 6: eine Seitenansicht des Sicherungsmittels.

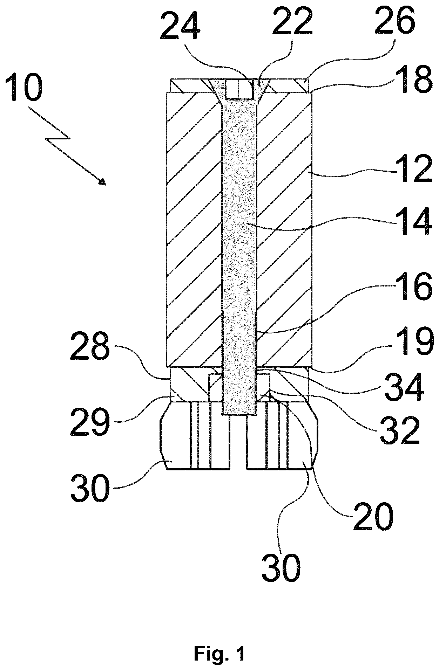

Fig. 1 zeigt den Verschlussstopfen 10 mit der Hülse 12 aus einem elastischen Material. Durch die Hülse 12 ist der Bolzen 14 geführt. Am ersten Hülsenende 18 weist der Bolzen 14 einen Bolzenkopf 22 mit einem Innensechskant 24 zum Ansetzen eines Schraubwerkzeugs, beispielsweise eines Inbusschlüssels, auf. An dem ersten Hülsenende 18 ist zwischen dem Bolzenkopf 22 und der Hülse 12 eine Druckscheibe 26 vorgesehen, welche eine konusförmige Vertiefung zur Aufnahme des konusförmig ausgebildeten Bolzenkopfs 22 aufweist, so dass der Bolzenkopf 22 nicht über die Druckscheibe 26 hinausragt und plan mit der Druckscheibe 26 abschließen kann. Die Druckscheibe 26 dient dazu, die vom Bolzenkopf 22 ausgeübte Kraft gleichmäßig auf die Hülse 12 zu übertragen.

Der Bolzen weist ein eine vordefinierte Länge aufweisendes Schraubgewinde 16 auf. An einem zweiten Hülsenende 19 ist auf das Schraubgewinde 16 eine Mutter 20 aufgeschraubt. Am zweiten Hülsenende 19 ist auch das Sicherungsmittel 28 mit den federnd an der Druckplatte 29 angeordneten Klemmmitteln 30 vorgesehen. Die Klemmmittel 30 ragen über die Außenmaße der Hülse 12 hinaus. Der Bolzen 14 ist durch den Druckplattendurchbruch 34 in der Druckplatte 29 hindurchgeführt. Zum Sichern der Mutter 20 gegen ein Verdrehen gegenüber dem Sicherungsmittel 28 ist in dem Sicherungsmittel 28 eine Ausnehmung 32 zur passgenauen formschlüssigen Aufnahme der Mutter 20 vorgesehen.

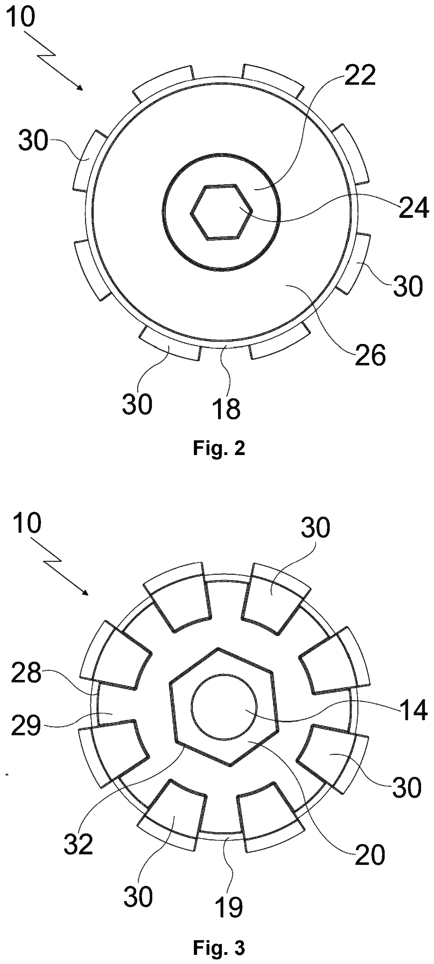

Fig. 2 zeigt eine Aufsicht auf den erfindungsgemäßen Verschlussstopfen 10 von der Seite des Bolzenkopfs 22 her mit dem im Bolzenkopf angeordneten Innensechskant 24.

Fig. 3 zeigt eine Aufsicht auf den Verschlussstopfen 10 von der Seite des Sicherungsmittels 28 her.

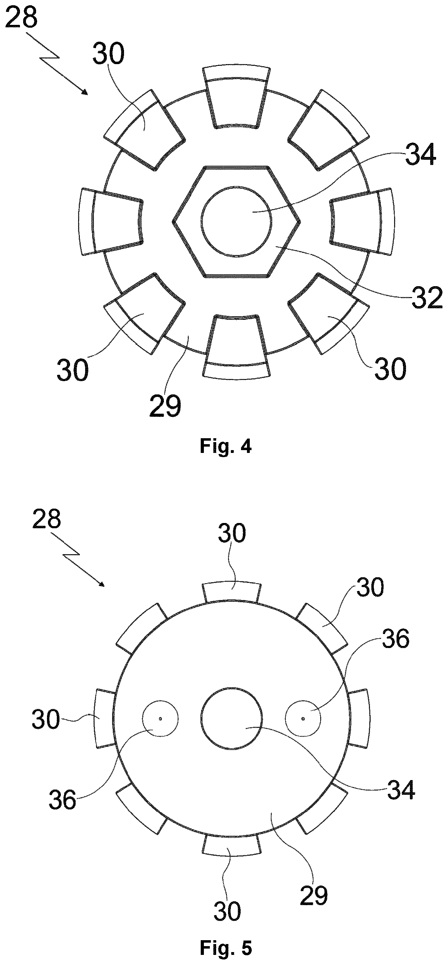

Die Figuren 4 bis 6 zeigen das Sicherungsmittel 28 ohne den Verschlussstopfen 10. Fig. 4 zeigt das Sicherungsmittel 28 von der im montierten Zustand von der Hülse 12 abgewandten Seite her. Hier ist deutlich die Ausnehmung 32 zur Aufnahme der Mutter 20 und der Druckplattendurchbruch 34, durch den der Bolzen 14 hindurchzuführen ist, zu sehen.

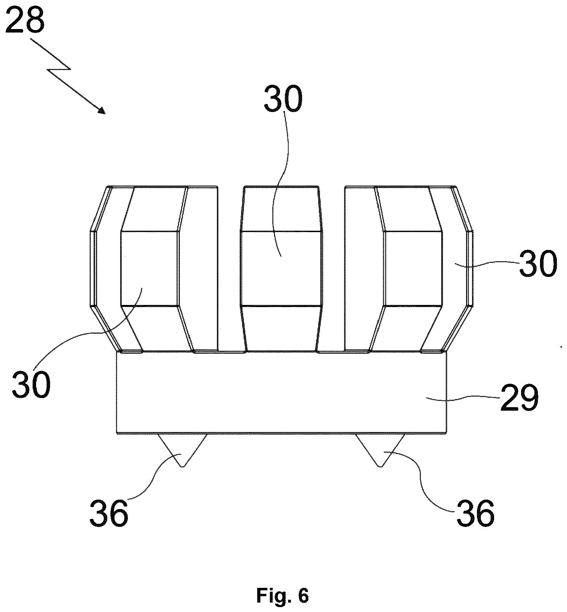

Eine Aufsicht von der der Hülse 12 zugewandten Seite ist in Fig. 5 dargestellt. Darin ist ebenfalls der Druckplattendurchbruch 34 zu sehen. Weiterhin sind zwei Vorsprünge 36 gezeigt, welche auch in der in Fig. 6 dargestellten Seitenansicht deutlich zu erkennen sind. Die Vorsprünge 36 drücken sich beim Anziehen des Bolzens 14 über den Innensechskant 24 im Bolzenkopf 22 in die Hülse 12 und verhindern dadurch ein Verdrehen der Hülse 12 gegenüber dem Sicherungsmittel 28. Dadurch wird vermieden, dass die Hülse 12 an der Wandung des abzudichtenden Durchbruchs oder der abzudichtenden Öffnung durch Verdrehen aufgerieben wird.

Bei der Verwendung des Verschlussstopfens 10 wird dieser mit dem Sicherungsmittel 28 voran in einen Durchbruch oder eine Öffnung eines Betonbauteils hineingeschoben, so dass das Sicherungsmittel 28 sich über die Klemmmittel 30, welche jeweils federnd mit der Druckplatte 29 des Sicherungsmittels 28 verbunden sind, im Durchbruch oder der Öffnung festklemmt. Sodann kann der Bolzenkopf 22 mittels eines in den Innensechskant 24 eingreifenden Schraubwerkzeugs in Verbindung mit der Mutter 20 und dem Schraubgewinde 16 so angezogen werden, dass dadurch die Hülse 12 zusammengedrückt wird. Durch die vorgegebene Länge des Schraubgewindes 16 ist die Strecke, um die die Hülse 12 zusammengedrückt wird, definiert. Durch das Zusammendrücken presst sich die Hülse 12 an die Innenwand des Durchbruchs bzw. der Öffnung und gleichzeitig gegen den Bolzen 14, so dass dadurch eine wasserdichte Abdichtung erfolgt.

### Bezugszeichenliste

- 10: Verschlussstopfen
- 12: Hülse
- 14: Bolzen
- 16: Schraubgewinde
- 18: erstes Hülsenende
- 19: zweites Hülsenende
- 20: Mutter
- 22: Bolzenkopf
- 24: Innensechskant
- 26: Druckscheibe
- 28: Sicherungsmittel
- 29: Druckplatte
- 30: Klemmmittel
- 32: Ausnehmung
- 34: Druckplattendurchbruch
- 36: Vorsprung

## Patentansprüche

1. Verschlussstopfen (10) oder Anker zum Verschließen eines Durchbruchs oder einer Öffnung in einem Betonbauteil, umfassend eine elastische Hülse (12) mit einem ersten Hülsenende (18) und einem zweiten Hülsenende (19), einen sich durch die Hülse (12) hindurch erstreckenden Bolzen (14) mit einem Schraubgewinde (16) mit darauf aufgeschraubter Mutter (20) an seinem einen Ende und einem Bolzenkopf (22) oder einem weiteren Schraubgewinde mit darauf aufgeschraubter weiteren Mutter an seinem anderen Ende, wobei zwischen der Mutter (20) und der Hülse (12) oder zwischen dem Bolzenkopf (22) oder der weiteren Mutter und der Hülse (12) ein Sicherungsmittel (28) vorgesehen ist, wobei das Sicherungsmittel (28) eine Druckplatte (29) und eine Druckplattendurchbruch (34), durch den sich der Bolzen (14) erstreckt, aufweist und sich über diese Druckplatte (29) am ersten Hülsenende (18) oder am zweiten Hülsenende (19) aufstützt, wobei sich am jeweils anderen der Hülsenenden (18, 19) der dort angeordnete Bolzenkopf (22) oder die dort angeordnete Mutter (20) oder weitere Mutter direkt oder über eine zwischen diesem Bolzenkopf (22) oder dieser Mutter (20) oder dieser weiteren Mutter und der Hülse (12) angeordnete Druckscheibe (26) an diesem anderen der Hülsenenden (18,19) aufstützt, wobei das Sicherungsmittel (28) zumindest ein federnd mit der Druckplatte (29) verbundenes Klemmmittel (30) aufweist, wobei das Klemmmittel (30) über eine gedanklich in Richtung des Sicherungsmittels und über das Sicherungsmittel hinaus verlängerte Außenfläche der Hülse (12) seitlich herausragt, um das Sicherungsmittel (28) in dem Durchbruch oder der Öffnung gegen ein Verdrehen gegenüber dem Betonbauteil zu sichern und wobei das zwischen der Mutter (20) oder dem Bolzenkopf (22) oder der weiteren Mutter und der Hülse (12) angeordnete Sicherungsmittel (28) gegenüber dieser Mutter (20) oder diesem Bolzenkopf (22) oder dieser weiteren Mutter gegen ein Verdrehen gesichert ist.

2. Verschlussstopfen (10) oder Anker nach Anspruch 1, wobei sich das Schraubgewinde (16) und/oder das weitere Schraubgewinde nur über eine vordefinierte Länge des Bolzens (14) erstreckt/erstrecken, so dass die Hülse (12) bei bis zum Ende des Schraubgewindes (16) eingeschraubter Mutter (20) und/oder bis zum Ende des weiteren Schraubgewindes eingeschraubter weiteren Mutter um eine vordefinierte Strecke zusammendrückt wird.

3. Verschlussstopfen (10) oder Anker nach Anspruch 1 oder 2, wobei die Mutter (20) oder der Bolzenkopf (22) oder die weitere Mutter gegenüber dem Sicherungsmittel (28) dadurch gegen ein Verdrehen gesichert ist, dass die Mutter (20) oder der Bolzenkopf (22) oder die weitere Mutter mit dem Sicherungsmittel (28) verklebt ist oder dass in dem Sicherungsmittel (28) eine Ausnehmung (32) zur formschlüssigen oder passgenauen reibschlüssigen Aufnahme der Mutter (20) oder des Bolzenkopfs (22) oder der weiteren Mutter vorgesehen ist.

4. Verschlussstopfen (10) oder Anker nach einem der vorhergehenden Ansprüche, wobei in einer dem Bolzen (14) zugewandten inneren Wandung der Hülse (12) ein umlaufender Wulst ausgebildet ist, der an der Stelle des Wulstes einen Spalt zwischen dem Bolzen (14) und der Hülse (12) verringert.

5. Verschlussstopfen (10) oder Anker nach einem der vorhergehenden Ansprüche, wobei das Sicherungsmittel (28) zumindest zwei federnd mit der Druckplatte (29) verbundene Klemmmittel (30) aufweist, wobei die Klemmmittel über eine gedanklich in Richtung des Sicherungsmittels und über das Sicherungsmittel hinaus verlängerte Außenfläche der Hülse (12) jeweils seitlich herausragen, um das Sicherungsmittel (28) in dem Durchbruch oder der Öffnung gegen ein Verdrehen gegenüber dem Betonbauteil zu sichern.

6. Verschlussstopfen (10) oder Anker nach Anspruch 5, wobei die Klemmmittel (30) achs- oder drehsymmetrisch um eine Längsachse des Bolzens (14) angeordnet sind.

7. Verschlussstopfen (10) oder Anker nach Anspruch 5 oder 6, wobei mindestens drei der Klemmmittel (30) achs- oder drehsymmetrisch um die Längsachse des Bolzens (14) angeordnet sind.

8. Verschlussstopfen (10) oder Anker nach einem der vorhergehenden Ansprüche, wobei das Sicherungsmittel (28) auf seiner der Hülse (12) zugewandten Seite mindestens einen Vorsprung (36) aufweist, um ein Verdrehen der Hülse (12) gegenüber dem Sicherungsmittel (28) zu verhindern oder zumindest zu erschweren, wenn die Hülse (12) und das Sicherungsmittel (28) aufeinandergedrückt werden.

9. Verschlussstopfen (10) oder Anker nach einem der vorhergehenden Ansprüche, wobei der Bolzenkopf (22), wenn er am anderen der Hülsenenden (18, 19) angeordnet ist, so ausgebildet ist, dass er mittels eines Schraubwerkzeugs verdreht werden kann.

10. Verschlussstopfen (10) oder Anker nach einem der vorhergehenden Ansprüche, wobei der Bolzen (14) auf seiner am anderen der Hülsenenden (18,19) gelegenen Seite ein Innengewinde aufweist.

11. Verschlussstopfen (10) oder Anker nach Anspruch 10, wobei sich das Innengewinde durch den Bolzenkopf (22) hindurch erstreckt.

12. Verschlussstopfen (10) oder Anker nach einem der vorhergehenden Ansprüche, wobei es sich bei dem Verschließen des Durchbruchs oder der Öffnung in dem Betonbauteil um ein wasserdichtes Verschließen handelt.

13. Verwendung eines Verschlussstopfens (10) oder Ankers nach einem der vorhergehenden Ansprüche zum Verschließen eines Durchbruchs oder einer Öffnung in einem Betonbauteil.

14. Verfahren zum Verschließen eines Durchbruchs oder einer Öffnung in einem Betonbauteil mit folgenden Schritten:
a) Hineinschieben eines Verschlussstopfens (10) oder Ankers nach einem der Ansprüche 1 bis 12 in den Durchbruch oder die Öffnung, wobei das Hineinschieben mit dem Sicherungsmittel (28) voran erfolgt und
b) Anziehen des Bolzenkopfes (22) oder der Mutter (20) oder der weiteren Mutter (20), welcher/welche auf der dem Sicherungsmittel (28) gegenüberliegenden Seite der Hülse (12) angeordnet ist, wobei die Hülse (12) so weit zusammengedrückt wird, dass sie dicht an einer Wand des Durchbruchs oder der Öffnung anliegt.

15. Verfahren nach Anspruch 14, wobei sich das Schraubgewinde (16) oder das weitere Schraubgewinde nur über eine vordefinierte Länge des Bolzens (14) erstreckt, so dass die Hülse (12) bei bis zum Ende des Schraubgewindes (16) eingeschraubter Mutter (20) und/oder bis zum Ende des weiteren Schraubgewindes eingeschraubter weiteren Mutter um eine vordefinierte Strecke zusammendrückt wird, wobei der Bolzenkopf (22) oder die weitere Mutter und/oder die Mutter (20) so weit angezogen wird/werden, bis die Mutter (20) das Ende des Schraubgewindes (16) und/oder die weitere Mutter das Ende des weiteren Schraubgewindes erreicht.

## Claims

1. A stopper (10) or anchor for closing a breakthrough or opening in a concrete component, comprising an elastic sleeve (12) having a first sleeve end (18) and a second sleeve end (19), a bolt (14) extending through the sleeve (12) and having a screw thread (16) with a nut (20) screwed thereon at one end thereof and a bolt head (22) or a further screw thread with a further nut screwed thereon at the other end thereof, wherein a securing means (28) is provided between the nut (20) and the sleeve (12) or between the bolt head (22) or the further nut and the sleeve (12), wherein the securing means (28) has a pressure plate (29) and a pressure plate aperture (34) through which the bolt (14) extends, and is supported via this pressure plate (29) at the first sleeve end (18) or at the second sleeve end (19), wherein at the respective other one of the sleeve ends (18, 19) the bolt head (22) arranged there or the nut (20) or further nut arranged there is supported at this other one of the sleeve ends (18, 19) directly or via a thrust washer (26) arranged between this bolt head (22) or this nut (20) or this further nut and the sleeve (12), wherein the securing means (28) comprises at least one clamping means (30) resiliently connected to the pressure plate (29), wherein the clamping means (30) projects laterally beyond an outer surface of the sleeve (12) which is mentally extended in the direction of the securing means and beyond the securing means, in order to secure the securing means (28) in the breakthrough or opening against rotation relative to the concrete component, and wherein the securing means (28) arranged between the nut (20) or the bolt head (22) or the further nut and the sleeve (12) is secured relative to this nut (20) or this bolt head (22) or this further nut is secured against rotation.

2. A stopper (10) or anchor according to claim 1, wherein the screw thread (16) and/or the further screw thread extend/extends only over a predefined length of the bolt (14) so that the sleeve (12) is compressed by a predefined distance when the nut (20) is screwed in to the end of the screw thread (16) and/or the further nut is screwed in to the end of the further screw thread.

3. A stopper (10) or anchor according to claim 1 or 2, wherein the nut (20) or the bolt head (22) or the further nut is secured against rotation with respect to the securing means (28) in that the nut (20) or the bolt head (22) or the further nut is bonded to the securing means (28) or in that a recess (32) is provided in the securing means (28) for receiving the nut (20) or the bolt head (22) or the further nut in a form-fitting or accurately fitting frictionally engaged manner.

4. A stopper (10) or anchor according to any one of the preceding claims, wherein a circumferential bead is formed in an inner wall of the sleeve (12) facing the bolt (14), reducing a gap between the bolt (14) and the sleeve (12) at the location of the bead.

5. A stopper (10) or anchor according to any one of the preceding claims, wherein the securing means (28) comprises at least two clamping means (30) resiliently connected to the pressure plate (29), the clamping means each projecting laterally beyond an outer surface of the sleeve (12) which is mentally extended in the direction of the securing means and beyond the securing means, to secure the securing means (28) in the breakthrough or opening against rotation relative to the concrete component.

6. The stopper (10) or anchor of claim 5, wherein the clamping means (30) are arranged axially or rotationally symmetrical about a longitudinal axis of the bolt (14).

7. The stopper (10) or anchor of claim 5 or 6, wherein at least three of the clamping means (30) are arranged axially or rotationally symmetrical about the longitudinal axis of the bolt (14).

8. The stopper (10) or anchor according to any one of the preceding claims, wherein the securing means (28) has at least one projection (36) on its side facing the sleeve (12) in order to prevent or at least make it more difficult for the sleeve (12) to rotate relative to the securing means (28) when the sleeve (12) and the securing means (28) are pressed against one another.

9. The stopper (10) or anchor according to any one of the preceding claims, wherein the bolt head (22), when located at the other one of the sleeve ends (18, 19), is adapted to be twisted by means of a screwing tool.

10. The stopper (10) or anchor according to any one of the preceding claims, wherein the bolt (14) has an internal thread on its side located at the other one of the sleeve ends (18, 19).

11. The stopper (10) or anchor of claim 10, wherein the internal threads extend through the bolt head (22).

12. The stopper (10) or anchor according to any one of the preceding claims, wherein the closing of the breakthrough or opening in the concrete component is a watertight closing.

13. Use of a stopper (10) or anchor according to any one of the preceding claims for closing a breakthrough or opening in a concrete component.

14. A method of closing a breakthrough or opening in a concrete component, comprising the following steps:
a) pushing a stopper (10) or anchor according to any one of claims 1 to 12 into the breakthrough or opening, the pushing being with the securing means (28) in front, and
b) tightening the bolt head (22) or the nut (20) or the further nut (20), which is arranged on the side of the sleeve (12) opposite to the securing means (28), wherein the sleeve (12) is compressed to such an extent that it abuts tightly against a wall of the breakthrough or opening.

15. The method of claim 14, wherein the screw thread (16) or the further screw thread extends only over a predefined length of the bolt (14) so that the sleeve (12) is compressed by a predefined distance when the nut (20) is screwed in to the end of the screw thread (16) and/or the further nut is screwed in to the end of the further screw thread, wherein the bolt head (22) or the further nut and/or the nut (20) is/are tightened until the nut (20) reaches the end of the screw thread (16) and/or the further nut reaches the end of the further screw thread.

## Revendications

1. Bouchon de fermeture (10) ou ancrage pour la fermeture d'une percée ou d'une ouverture dans un composant de béton, comprenant un manchon élastique (12) avec une première extrémité de manchon (18) et une seconde extrémité de manchon (19), un boulon (14) s'étendant à travers le manchon (12) avec un filetage vissé (16) avec un écrou vissé sur lui (20) à une de ses extrémités et une tête de boulon (22) ou un autre filetage vissé avec un autre écrou vissé sur lui à son autre extrémité, dans lequel un moyen de fixation (28) est prévu entre l'écrou (20) et le manchon (12) ou entre la tête de boulon (22) ou l'autre écrou et le manchon (12), dans lequel le moyen de fixation (28) présente une plaque de compression (29) et un passage de plaque de compression (34) à travers lequel s'étend le boulon (14), et s'appuie par le biais de cette plaque de compression (29) sur la première extrémité de manchon (18) ou sur la seconde extrémité de manchon (19), dans lequel la tête de boulon (22) qui y est disposée ou l'écrou (20) ou l'autre écrou qui y est disposé s'appuie à l'autre extrémité respective des extrémités de manchon (18, 19) directement ou par le biais d'un disque de compression (26) disposé entre cette tête de boulon (22) ou cet écrou (20) ou cet autre écrou et le manchon (12) sur cette autre extrémité des extrémités de manchon (18, 19), dans lequel le moyen de fixation (28) présente au moins un moyen de serrage (30) connecté de manière élastique à la plaque de compression (29), dans lequel le moyen de serrage (30) dépasse latéralement d'une face externe du manchon (12) prolongée conceptuellement en direction du moyen de fixation et au-delà du moyen de fixation pour fixer le moyen de fixation (28) dans la percée ou l'ouverture à l'encontre d'une torsion par rapport au composant de béton et dans lequel le moyen de fixation (28) disposé entre l'écrou (20) ou la tête de boulon (22) ou l'autre écrou et le manchon (12) est fixé à l'encontre d'une torsion par rapport à cet écrou (20) ou cette tête de boulon (22) ou cet autre écrou.

2. Bouchon de fermeture (10) ou ancrage selon la revendication 1, dans lequel le filetage vissé (16) et/ou l'autre filetage vissé ne s'étend(ent) que sur une longueur prédéfinie du boulon (14) de sorte que le manchon (12) est comprimé d'une distance prédéfinie dans le cas de l'écrou (20) vissé jusqu'à l'extrémité du filetage vissé (16) et/ou de l'autre écrou vissé jusqu'à l'extrémité de l'autre filetage vissé.

3. Bouchon de fermeture (10) ou ancrage selon la revendication 1 ou 2, dans lequel l'écrou (20) ou la tête de boulon (22) ou l'autre écrou est fixé(e) à l'encontre d'une torsion par rapport au moyen de fixation (28) en ce que l'écrou (20) ou la tête de boulon (22) ou l'autre écrou est collé avec le moyen de fixation (28) ou qu'un évidement (32) pour la réception par conjugaison de formes ou entraînée par friction à précision d'ajustement de l'écrou (20) ou de la tête de boulon (22) ou de l'autre écrou est prévu dans le moyen de fixation (28).

4. Bouchon de fermeture (10) ou ancrage selon une des revendications précédentes, dans lequel un bourrelet périphérique qui réduit à la place du bourrelet une fente entre le boulon (14) et le manchon (12) est réalisé dans une paroi interne du manchon (12) tournée vers le boulon (14).

5. Bouchon de fermeture (10) ou ancrage selon une des revendications précédentes, dans lequel le moyen de fixation (28) présente au moins deux moyens de serrage (30) connectés de manière élastique à la plaque de compression (29), dans lequel les moyens de serrage dépassent latéralement d'une face externe du manchon (12) prolongée conceptuellement en direction du moyen de fixation et au-delà du moyen de fixation pour fixer le moyen de fixation (28) dans la percée ou l'ouverture à l'encontre d'une torsion par rapport au composant de béton.

6. Bouchon de fermeture (10) ou ancrage selon la revendication 5, dans lequel les moyens de serrage (30) sont disposés à symétrie axiale ou de rotation autour d'un axe longitudinal du boulon (14).

7. Bouchon de fermeture (10) ou ancrage selon la revendication 5 ou 6, dans lequel au moins trois des moyens de serrage (30) sont disposés à symétrie axiale ou de rotation autour de l'axe longitudinal du boulon (14).

8. Bouchon de fermeture (10) ou ancrage selon une des revendications précédentes, dans lequel le moyen de fixation (28) présente au moins une saillie (36) sur son côté tourné vers le manchon (12) pour empêcher ou au moins entraver une torsion du manchon (12) par rapport au moyen de fixation (28) lorsque le manchon (12) et le moyen de fixation (28) sont poussés l'un sur l'autre.

9. Bouchon de fermeture (10) ou ancrage selon une des revendications précédentes, dans lequel la tête de boulon (22) est réalisée de sorte qu'elle peut être tordue au moyen d'un outil de vissage lorsqu'elle est disposée sur l'autre extrémité des extrémités de manchon (18, 19).

10. Bouchon de fermeture (10) ou ancrage selon une des revendications précédentes, dans lequel le boulon (14) présente un filetage interne sur son côté situé sur l'autre extrémité des extrémités de manchon (18, 19).

11. Bouchon de fermeture (10) ou ancrage selon la revendication 10, dans lequel le filetage interne s'étend à travers la tête de boulon (22).

12. Bouchon de fermeture (10) ou ancrage selon une des revendications précédentes, dans lequel il s'agit d'une fermeture étanche à l'eau dans le cas de la fermeture de la percée ou de l'ouverture dans le composant de béton.

13. Utilisation d'un bouchon de fermeture (10) ou d'un ancrage selon une des revendications précédentes pour la fermeture d'une percée ou d'une ouverture dans un composant de béton.

14. Procédé de fermeture d'une percée ou d'une ouverture dans un composant de béton avec les étapes suivantes:
a) insertion d'un bouchon de fermeture (10) ou d'un ancrage selon une des revendications 1 à 12 dans la percée ou l'ouverture, dans lequel l'insertion s'effectue avec le moyen de fixation (28) vers l'avant et
b) serrage de la tête de boulon (22) ou de l'écrou (20) ou de l'autre écrou (20) qui est disposé(e) sur le côté du manchon (12) opposé au moyen de fixation (28), dans lequel le manchon (12) est comprimé aussi loin qu'il repose de manière étanche sur une paroi de la percée ou de l'ouverture.

15. Procédé selon la revendication 14, dans lequel le filetage vissé (16) ou l'autre filetage vissé ne s'étend que sur une longueur prédéfinie du boulon (14) de sorte que le manchon (12) est comprimé d'une distance prédéfinie dans le cas de l'écrou (20) vissé jusqu'à l'extrémité du filetage vissé (16) et/ou de l'autre écrou vissé jusqu'à l'extrémité de l'autre filetage vissé, dans lequel la tête de boulon (22) ou l'autre écrou et/ou l'écrou (20) est/sont serré(s) jusqu'à ce que l'écrou (20) atteigne l'extrémité du filetage vissé (16) et/ou l'autre écrou atteigne l'extrémité de l'autre filetage vissé.
